Europäisches Patentamt

European Patent Office

Office européen des brevets

(11) Publication number: **0 216 567**
A2

(12) **EUROPEAN PATENT APPLICATION**

(21) Application number: **86306970.4**

(22) Date of filing: **10.09.86**

(51) Int. Cl.⁴: **A 21 D 8/04**

(30) Priority: **10.09.85 US 774547**
**25.08.86 US 898641**

(43) Date of publication of application:
**01.04.87 Bulletin 87/14**

(84) Designated Contracting States:
**FR GB IT**

(71) Applicant: **Siegel, Jack B.**
**Apartment 306 1506 South Bentley**
**Los Angeles California 90025(US)**

(72) Inventor: **Siegel, Jack B.**
**Apartment 306 1506 South Bentley**
**Los Angeles California 90025(US)**

(74) Representative: **Marlow, Nicholas Simon et al,**
**Reddie & Grose 16, Theobalds Road**
**London WC1X 8PL(GB)**

(54) Treatment of grain with yeast and flour produced from said grain.

㊼ Methods for treating grain to improve the properties of flour made from such grain include treating the grain with a mixture of yeast, sugar and water; and/or yeast, vinegar and water; and/or yeast food and and water; and/or dehulling or cracking the grain before such treatments. In each of these methods, the grains are permitted to swell by imbibition of one or more of these aqueous mixtures.

EP 0 216 567 A2

TREATMENT OF GRAIN WITH YEAST AND FLOUR
PRODUCED FROM SAID GRAIN

0216567

This invention relates to methods for treating grain to improve the properties of flour made from such grain. The invention provides improvements to the grain-treating methods disclosed and claimed in my U. S. Patent 3,833,737, entitled, "Treatment of Grain with Yeast and Flour Produced from Said Grain," issued September 3, 1974. By this reference, I incorporate in this disclosure the entire disclosure of that patent.

In accordance with this invention, I have found that the addition of one or more of the following steps to the methods disclosed and claimed in my prior '737 patent tends to shorten the time required to complete the imbibition of water and yeast by the cereal grains treated. Preferably, I use baker's or brewer's yeast, but others can be used. Moreover, cereal grains made by these methods tend to produce better-tasting flour and bread in shorter time than the processes disclosed in my '737 patent. These methods also tend to shorten milling time needed to make flour from such grains, increase the shelf life of breads and other products made from such flour, and improve the resistance of such flour and products made therefrom attack by parasites.

One of the additional steps that this invention contemplates is the addition of one or more sugars to the mixture of cereal grain, yeast and water formed in the first step of the process claimed in my '737 patent. In general, I can utilize any edible sugar. However, preferably, I use one or more maltoses, such as sprouted wheat or barley malt. Generally, I use only one kind of sugar, but I can use two or more different kinds in any ratio by weight. The amount of sugar that I add is preferably in the range of about 0.1 ounce to about 160 ounces, or more, per hundred pounds of grain. The sugar is preferably added with the water and yeast, and has the advantages of speeding fermentation, and driving water into the grains faster than would otherwise occur.

Another additional step that this invention contemplates is the addition of yeast food to the mixture of cereal grain, sugar and water formed in the first step of the process claimed in my '737 patent. In general, I can utilize any edible yeast food. Generally, I use only one kind of yeast food, but I can use two or more different kinds in any ratio by weight. The amount of yeast food that I add is preferably in the range of about 0.1 ounce to about 16 ounces, or more, per hundred pounds of grain. Preferably, I add yeast food with the water and yeast. Adding one or more yeast foods speeds fermentation, thus reducing overall cost.

Another additional step that this invention contemplates is the addition of vinegar to the mixture of cereal grain, sugar and water formed in the first step of the process claimed in my '737 patent. In preferred embodiments, the amount of vinegar is in the range of about 0.5 ounce to about 16 ounces, or more, per 100 pounds of grain. Preferably, I add the vinegar with the water and yeast. Adding vinegar speeds the fermentation process, and improves the flavor of flour made from the treated grains.

Whether or not I use any or all of the foregoing steps, I can also treat the cereal grain before mixing the grain with yeast, water and possibly other ingredients such as sugars and yeast foods and maltose by dehulling the grains, cracking the grains, or both. Preferably, I dehull or crack from 1% up to 100% of the grain by weight before mixing the grain with yeast, water and one or more other additives such as sugars and yeast foods and maltose. The means and methods for dehulling and cracking can be any known method.

In addition to, or instead of any of the foregoing additional steps, I can carry out any of my methods under an atmosphere comprising in the range of about 1 to about 50 psi, or more, by volume, or at least 1% by

**0216567**

volume, of carbon dioxide. This added step can speed the process, reducing overall cost.

Preferably, I carry out these new methods in pressurized vessels that can accommodate in the range of about 3 to about 500 or more pounds of the grain/water/yeast mixtures. Throughout the method, the pH is preferably close to neutral, but can lie in the range of about 3 to about 10. To carry out the process at an acidic pH, I preferably add one or more organic acids such as acetic acid, but other organic acids such as formic acid may also be used. The amount of the acid added depends on the desired pH, and can be adjusted accordingly. After treatment, the grain should be dried until its moisture content is in the range of about 7% to about 16% by weight.

Grains that can successfully be treated by these methods include high quality (spring or Durum red winter wheats or white), preferably cleaned for milling. In commercial practice of the processes of this invention, I prefer to use about 4 pounds of yeast to about 235 bushels of wheat. From 500 bushels of treated grain, I can obtain about 2,000 pounds of flour.

The methods of this invention are preferably carried out in a vessel that can maintain, and withstand internal pressures up to about 120 psi. Such a vessel should have a capacity of at least about 330 gallons, although larger or smaller vessels can be used. Preferably, this vessel includes a release valve or other means for adjusting the pressure as desired; a gauge to measure internal pressure; and means for draining excess water after treatment. The excess water can be saved and used for tempering the grain during the milling process. These methods also preferably employ means for heating vessel contents to a temperature of about 40° to 125°F. or higher; means for conveying the treated grain to means for drying the grain; and means for drying the grain/yeast mixture.

The means for drying the grain should have means for agitating the grain gently, with air or otherwise, during drying.

CLAIMS

1.    A process for treating cereal grain to improve the properties of flour made therefrom comprising the steps of:

(a) contacting the cereal grains with a mixture of yeast, at least one type of sugar and water at a temperature in the range of about 40°F. to about 180°F., where the yeast is present in an amount of at least about one ounce of yeast to about 100 pounds; and

(b) continuing said contact for a time sufficient for said grains to swell with imbibition of water where the imbibition is from about 20% to about 80% of the original weight of the grains.

2.    A process for treating cereal grain to improve the properties of flour made therefrom comprising the steps of:

(a) containing the cereal grains with a mixture of yeast, at least one type of yeast food and water at a temperature in the range of about 40°F. to about 180°F., where the yeast is present in an amount of at least about one ounce of yeast to about 100 pounds; and

(b) permitting said contact to take place for a time sufficient for said grains to swell with imbibition of water where the imbibition is from about 20% to about 80% of the original weight of the grains.

3.    A process according to claim 2 in which the food is baker's yeast food or brewer's yeast food.

4.    A process according to any preceding claim in which, after imbibition, the cereal grains are dried and milled to produce flour.

5.    A process according to any preceding claim in which sufficient water is used initially to cover said grains.

6.    A process according to any preceding claim in which the said cereal is wheat.

7.    A process according to any preceding claim in which, after imbibition, the cereal grains are washed.

8.   A process according to claim 7 in which, after washing the cereal grains are dried.

9.   A process according to any preceding claim in which imbibition is carried out under an atmosphere comprising at least 1% carbon dioxide by volume.

10.   A process according to any preceding claim in which the grain is dehulled or cracked prior to contacting with the mixture containing yeast and water.

11.   A process according to any preceding claim in which the mixture of yeast and water with which the grains are contacted also comprises vinegar.